# EUROPEAN PATENT APPLICATION

(11) **EP 2 256 387 A1**
(43) Date of publication of application: **01.12.2010**
(21) Application number: 10163655.3
(22) Date of filing: 21.05.2010
(51) Int. Cl.: F16K 17/16

(54) **Gas pipe-line system and a pipe-line component with a burst disc to be used in gas pipe-line system**

(30) Priority: 22.05.2009 NL 2002916
(71) Applicant: Scientific Glass Technology Singapore Pte Ltd., Singapore 118258 (SG)
(72) Inventor: van der Maas, Marinus Frans, 4341 LC, Arnemuiden (NL)
(74) Representative: Hatzmann, Martin

(57) **Abstract**

A gas pipe system provided with a gas source and downstream of the gas source a gas pipe with a gas pipe end, which in use is connected to a processing module, wherein the gas pipe system is arranged for conducting a gas from the gas source to the processing module, wherein the gas pipe system comprises at least one gas pipe component (6') with an outer jacket (7) comprising an outer jacket inner space (7a), which is at least partly of a material having a relatively low bursting pressure, wherein the at least one gas pipe component (6') is provided with a protection (8) against overpressure occurring in an outer jacket inner space (7a) in order to prevent breaking of the outer jacket (7) at the overpressure. The invention further relates to a gas pipe component (6') provided with such a protection (3) for use in such a gas pipe system.

## Description

The invention relates to a gas pipe system provided with a gas source and downstream of the gas source a gas pipe with a gas pipe end, which in use is connected to a processing module, wherein the gas pipe system is arranged for conducting a gas from the gas source to the processing module, wherein the gas pipe system comprises at least one gas pipe component with an outer jacket comprising an outer jacket inner space, which is at least partly of a material having a relatively low bursting pressure.

The known gas pipe system is provided with a check valve for taking up pressure differences which in use may arise in the gas pipe system due to undesirable (dys)functioning of at least one of the components in the gas pipe system or due to an occurring defect somewhere in the gas pipe system. In the event of an increased pressure or pressure impulse so caused, the check valve ensures that gas is let out of the gas pipe system in order to compensate the pressure impulse or increased pressure to prevent parts of the gas pipe system getting broken due to the (too) high pressure.

A disadvantage of the known gas pipe system is that upon a suddenly occurring relatively high pressure in the gas pipes, e.g., caused by the suddenly occurring defect somewhere in the gas pipe system, the check valve may respond slowly. As a result, the check valve does not blow the gas out of the gas pipe system in time, so that the weakest parts in the gas pipe system, viz. the components provided with a material having the lowest bursting pressure in the gas pipe system, may break due to the pressure. The weakest parts are chiefly the pipe components that are provided with an at least partly transparent outer housing. Transparent parts have a lower bursting pressure than, for example, the stainless steel or copper parts of the gas pipe system and will break first at a high pressure. When a pipe component breaks, this creates an open fluid communication between the contents of the gas pipe system and the air in the space around the gas pipe system. As a result, air particles, whether or not with other undesirable particles, can diffuse from the environment into the gas pipe system. Especially when in processes very pure gases are used, pollution of the pipe system is undesirable. Since pollution necessitates prolonged flushing of the pipes to prevent process equipment at the end of the gas pipe system from becoming polluted, processes may be at a standstill for a long time. Flushing can sometimes take a few hours during which the process is idle. Also, it is undesirable that when a pipe component breaks, gas enters the surrounding space. This is undesirable with a view to the safety of operators present in the space.

In order to remove the above-mentioned disadvantage, the invention contemplates providing an improved gas pipe system with an improved overpressure protection. More particularly, the invention contemplates providing a gas pipe system which prevents, upon a sudden pressure increase or pressure impulse, breaking of the weakest parts of the gas pipe system, resulting in undesirable gas release in the space in which the pipe system is disposed, or the gas pipe system becoming polluted.

To this end, the invention provides a gas pipe system according to the type described in the preamble, **characterized in that** the at least one gas pipe component is provided with a protection against overpressure occurring in an outer jacket inner space in order to prevent breaking of the outer jacket at the overpressure. When an unexpected pressure increase or pressure impulse arises in the gas pipe system, this pressure will also penetrate into the outer jacket of the gas pipe component. The protection of the gas pipe component ensures at that moment that the pressure is reduced by leading the gas out of the gas pipe component. In this way, the outer jacket is prevented from breaking, so that no gas from the gas pipe system ends up in the space around the gas pipe system, and air from the space is prevented from penetrating into the gas pipe system.

Preferably, according to a further elaboration of the invention, the protection is a break plate, which is arranged to break at an overpressure in the outer jacket inner space, in order to discharge gas from the gas pipe component. This break plate breaks due to the overpressure before the outer jacket has a chance to break. The breaking of the break plate creates a way out for the gas in the gas pipe component which is not present in normal use of the gas pipe system.

In operation, the gas flows from the gas source via the at least one gas pipe component through the gas pipe system. For this, according to a further elaboration of the invention, the outer jacket inner space can be in fluid communication with the gas pipe or in the outer jacket inner space an inner housing may be provided which is in fluid communication with the gas pipe. When an inner housing is provided in the outer jacket inner space through which the gas flows, this inner housing will break first upon a sudden pressure increase or a pressure impulse. The gas then ends up in the outer jacket inner space. After this, the break plate breaks to discharge the gas, so that in this embodiment too the outer jacket remains intact.

According to a further elaboration of the invention, the break plate has a bursting pressure that is lower than the bursting pressure of the outer jacket. Preferably, the outer jacket has a bursting pressure of approximately 15 bar. The break plate may be designed in different ways and can have a bursting pressure of, for example, 1 bar, 2 bar, 3 bar, and so forth, with the bursting pressure of the break plate being in any case lower than the bursting pressure of the outer jacket, hence lower than 15 bar. By designing the break plate such that the bursting pressure thereof is much lower than the bursting pressure of the outer jacket, the chance of the outer jacket breaking despite a protection being present in the gas pipe component is minimal. Certainly with a view to the safety of an operator of the gas pipe system, this safety margin is desirable.

According to an embodiment of the invention, the inner housing may be at least for a part of a material having a relatively low bursting pressure. Preferably, according to a further elaboration of the invention, the outer jacket has a higher bursting pressure than the inner housing. The inner housing can have a bursting pressure of, for example, approximately 11 bar. The inner housing is the first to break upon the pressure increase and thereby provides a throughflow opening for the gas from the inner housing to the outer jacket inner space. The outer jacket inner space remains intact and the gas will leave the gas pipe component via the break plate. It is particularly favorable when between the bursting pressure of the outer jacket and the bursting pressure of the inner housing a safety margin is provided so that upon breaking of the inner housing the outer jacket remains intact during a further pressure increase, in any case until the break plate breaks.

According to a further elaboration of the invention, the material having a relatively low bursting pressure is a transparent material, e.g., glass or acrylate. At some gas pipe components an operator must read information from the at least one gas pipe component. Therefore the gas pipe component can at least partly comprise a transparent material. In this way, the operator can see the contents of the gas pipe component and possibly read information from it.

According to an embodiment of the invention, the at least one gas pipe component is provided with a cartridge which comprises the outer jacket and a coupling part, and a base connected with the coupling part, which is connected to the gas pipe, so that the gas pipe is in fluid communication with the cartridge. The cartridge and the base together form the gas pipe component. The base is fixedly connected with the gas pipe system and typically has a bursting pressure in the same order of magnitude as the bursting pressure of the gas pipe. The cartridge is connected by a coupling part to the base and can easily be replaced. Certainly when the cartridge depending on the function has a relatively short life, it is convenient that the cartridge can be quickly replaced. According to a further elaboration of the invention, the base may be implemented as a regulator, filter base, tap, flowmeter or as a valve. In a further elaboration of the invention, the cartridge may be provided with filter material to filter the gas, and/or with indicator material to indicate pollution of gas. Such a cartridge may be placed on the different bases for fulfilling the filter or indicator function.

According to a further elaboration of the invention, the break plate is provided in the coupling part of the cartridge, and the break plate is in fluid communication with the outer jacket inner space. Further, in a further elaboration of the invention, on the side of the break plate remote from the outer jacket inner space, a discharge channel is provided for discharging gas, wherein in use after the breaking of the break plate the outer jacket inner space is in fluid communication with the discharge channel. The gas that has accumulated in the outer jacket inner space is discharged through the discharge channel. Preferably, the discharge channel is connected to an exhauster or a discharge space, such as a well ventilated space.

In a further elaboration of the invention, in the discharge channel of the at least one gas pipe component a sensor is provided for detecting gas in the discharge channel. According to a further elaboration of the invention, the at least one sensor may be connected to a control, for controlling on the basis of a sensor signal the at least one pipe component or the gas source, and/or for emitting on the basis of the sensor signal a visual signal and/or audio signal in order to warn a user. In this way, a user or operator is automatically warned in the event of the protection of a cartridge coming into action. The operator may be informed about the location of the broken cartridge in the gas pipe system, so that the operator can quickly remedy a defect, if any, and replace the cartridge. In the case where the gas pipe system is not under surveillance by an operator or user, the control may be so designed as to automatically shut off the gas source in the event of a protection coming into action. The control can naturally also control other gas pipe components if desired.

In a further elaboration of the invention, in the fluid communication between the outer jacket inner space and the discharge channel at least one sealing is provided, e.g., an O-ring, in order to prevent microleakage. This prevents slow leakage of small amounts of gas into the space surrounding the gas pipe system.

According to a further elaboration of the invention, an outlet of the discharge channel has a different configuration than an inflow and outflow opening of the cartridge to prevent improper connection of the cartridge to the base. Even when a user or operator is not used to replacing a cartridge, the configuration of the base and the outflow and inflow openings on the cartridge will make it clear how the cartridge should be placed on the base. Improper placement is prevented, so that the risk of breaking of an outer jacket is reduced.

According to a further elaboration of the invention, the gas pipe system can comprise multiple gas pipe components, which are provided with an outer jacket having a relatively low bursting pressure. Depending on the function of the gas pipe system and the kind of gas that flows through the gas pipe system, different gas pipe components may be provided in the gas pipe system.

Also, the invention relates to a gas pipe component for the use in an above-mentioned gas pipe system, wherein the gas pipe component has an outer jacket at least partly provided with material having a relatively low bursting pressure, wherein the gas pipe component is provided with a protection against overpressure occurring in the outer jacket inner space in order to prevent breaking of the outer jacket in use.

Such a gas pipe component affords like advantages and effects to those mentioned and discussed earlier in relation to the gas pipe system.

Further elaborations of the invention are described in the subclaims and will be clarified hereinafter with reference to the drawings, in which:
Fig. 1 shows a schematic representation of an embodiment of a gas pipe system;
Fig. 2a shows a sectional view of a first embodiment of a gas pipe component;
Fig. 2b shows a detail of the gas pipe component of Fig. 2a;
Fig. 3a shows a sectional view of a second embodiment of a gas pipe component;
Fig. 3b shows a detail of the gas pipe component of Fig. 3a;
Fig. 4a shows a sectional view of a third embodiment of a gas pipe component;
Fig. 4b shows a detail of the gas pipe component of Fig. 4a; and
Fig. 5 shows a perspective view of a fourth embodiment of a gas pipe component.

It is noted that like reference numerals refer to like parts in the different figures.

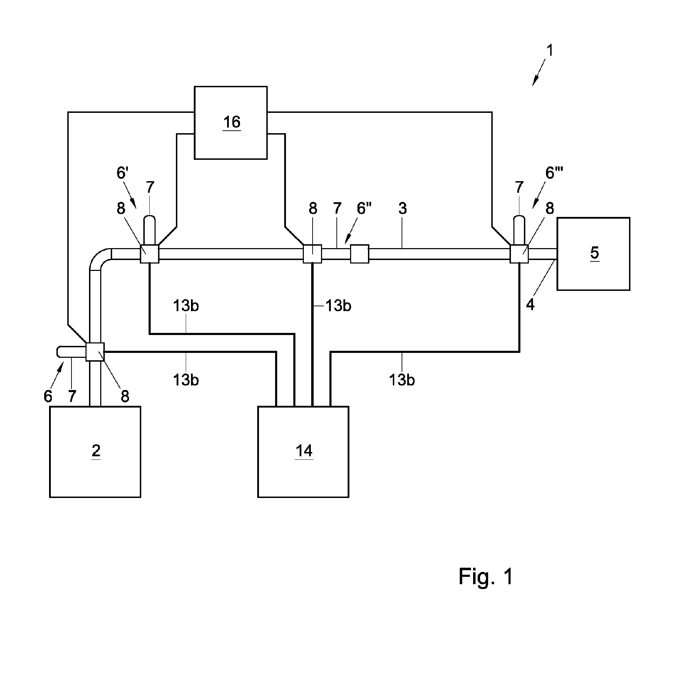

In Fig. 1 there is shown a schematic overview of a gas pipe system 1 according to the invention. The gas pipe system 1 is arranged to conduct gas from a gas source 2 via a gas pipe 3 to a gas pipe end 4 to which a processing module 5 is provided. Such a processing module 5 may be arranged for different applications, such as gas chromatography, mass spectrometry or a production process under conditioned gas conditions, such as, for example, a production process for manufacturing wafers or DVDs and the like. The processing module 5 may also be arranged as a driving unit for work with compressed air or for welding applications. The gas source 2 may be, e.g., a gas cylinder, a gas generator or a compressor, depending on the use of the gas pipe system 1.

The gas pipe 3 comprises a number of gas pipe components 6, 6', 6", 6"', which have an outer jacket 7 comprising an outer jacket inner space 7a, which is at least partly of a material having a relatively low bursting pressure. The relatively low bursting pressure is a bursting pressure that is in any case lower than a bursting pressure of other parts in the gas pipe system, e.g., of stainless steel or copper parts of the gas pipe system. In this exemplary embodiment, for example, a gas pipe component 6 is a regulator, which is provided with an indicator, another component 6' is a quick-change filter, a next component 6" is an in-line filter and a last gas pipe component is a tap 6"' provided with an indicator. Also, a gas pipe component may be, e.g., a valve.

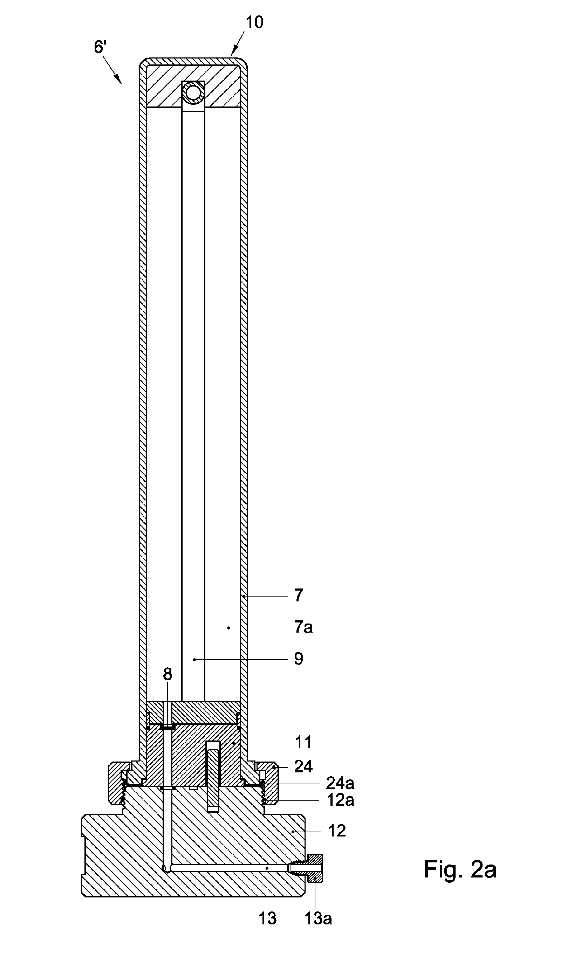

The components 6, 6', 6", 6"' are provided with a protection 8 (see Figs. 2a-5) against overpressure occurring in an outer jacket inner space 7a in order to prevent breaking of the outer jacket 7 of one of the gas pipe components 6, 6', 6", 6"'. Such a protection 8 takes up pressure impulses and sudden pressure increases due to, for example, a defect somewhere in the gas pipe system. The protection 8 ensures that upon an overpressure or a pressure impulse an excess of gas is discharged from the outer jacket inner space 7a. To this end, the gas pipe components 6, 6', 6", 6"' are connected to an exhauster 14 by means of discharge pipes 13b. The discharge pipes 13b are connected by one end to the respective gas pipe components 6, 6', 6", 6"' and by another end to the inlet of the exhauster 14. When the protection 8 of a gas pipe component 6, 6', 6", 6"' comes into action, gas from the outer jacket inner space 7a is discharged from the component 6, 6', 6", 6"' and exhausted. Further, a gas pipe component 6, 6', 6", 6"' can comprise a sensor (not shown) for detecting gas directly after the protection 8 has come into action. The sensor 15 may be connected to a control 16. This sensor 15 and control 16 will be discussed in more detail with reference to the following figures.

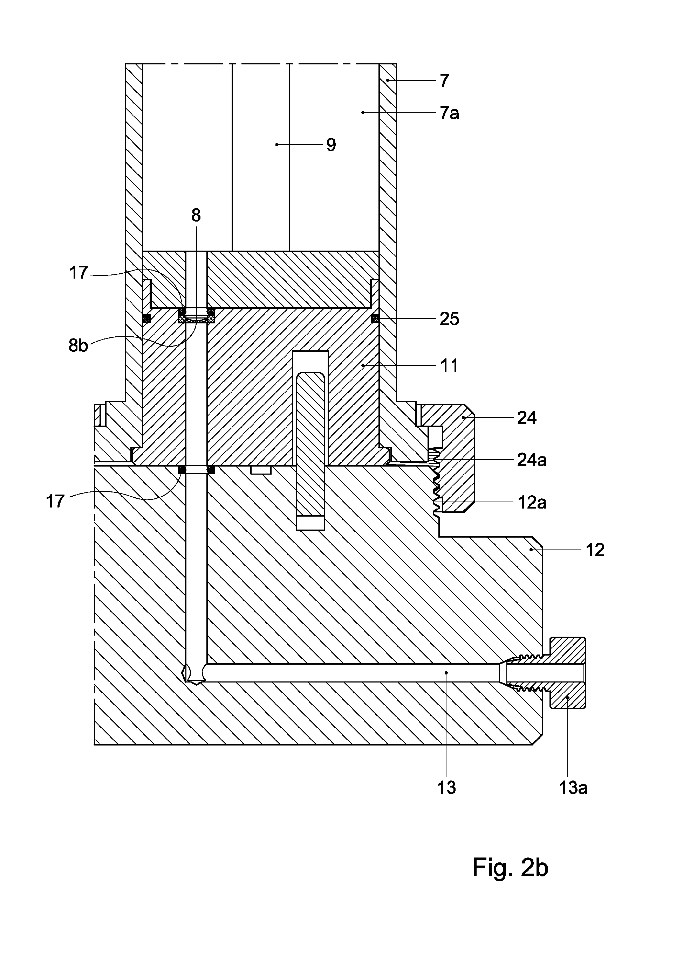

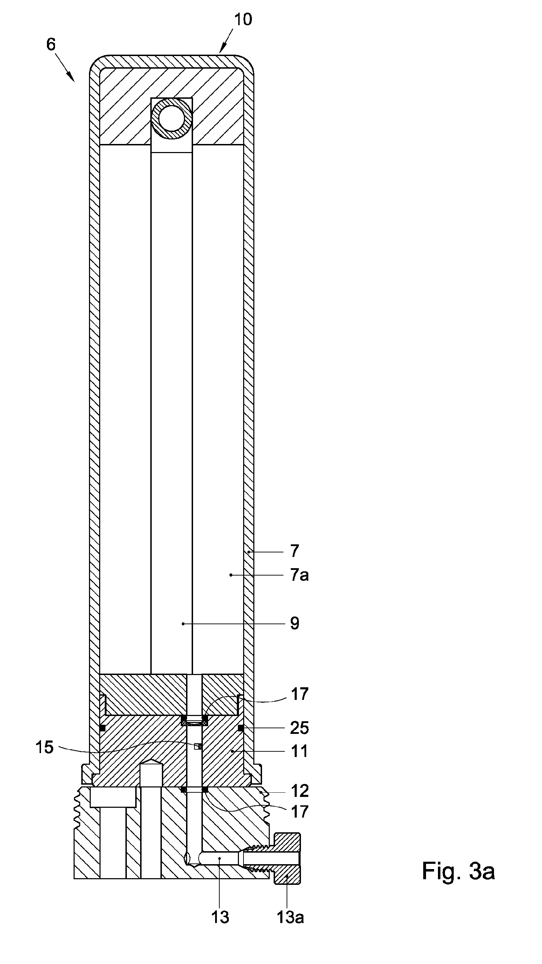

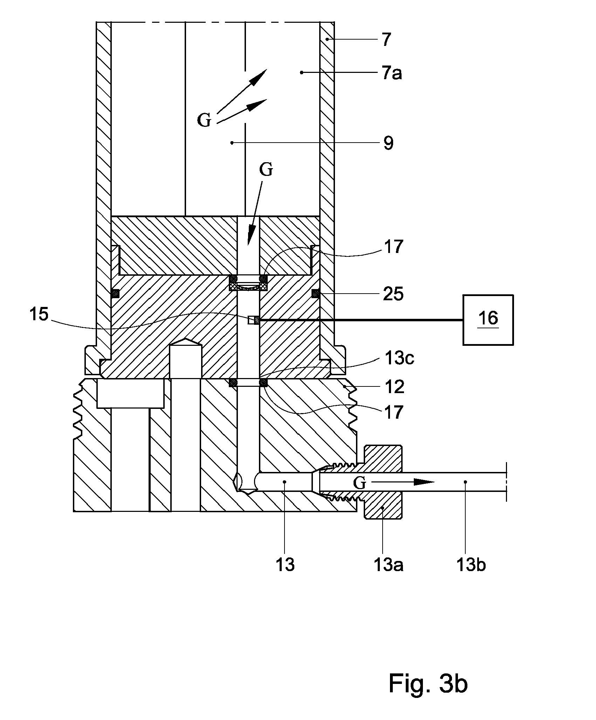

In Figs. 2a and 2b there is shown a gas pipe component 6' according to an embodiment of the invention. The gas pipe component 6' shown is a rapid-coupling filter. Such a filter is provided with a cartridge 10, in this embodiment a substantially elongate filter, and a base 12. The cartridge comprises an outer jacket 7 which surrounds an outer jacket inner space 7a. Provided in the outer jacket 7 is an inner housing 9 which is in fluid communication with an inflow opening and an outflow opening (not shown). The inflow opening is in fluid communication with an upstream part of the gas pipe 3 and the outflow opening is in fluid communication with a downstream part of the gas pipe 3. In use, gas flows into the rapid-coupling filter at the base 12, and then flows via an inflow opening of the cartridge 10, through the inner housing 9 and via the outflow opening of the cartridge 10 via the base 12 back into the gas pipe 3 again. Provided in the inner housing 9 is filter material for filtering the gas in order to remove undesirable substances, such as, e.g., water, oxygen or hydrocarbons, from the gas flow, so that these substances do not reach the processing module. The cartridge 10 further comprises a coupling part 11 with which the cartridge 10 can be fastened to the base 12 using a fastening ring 24. For this purpose, the fastening ring 24 is provided with an internal thread 24a which engages an external thread 12a of the base 12. So, only the fastening ring 24 needs to be tightened for fastening the cartridge 10 onto the base 12. In the coupling part 11, the protection, a break plate 8, is provided. This break plate 8 is so designed that it breaks when the pressure in the outer jacket inner space 7a becomes higher than the bursting pressure of the break plate 8. Preferably, the bursting pressure of the break plate 8 is approximately 1 bar and the bursting pressure of the break plate 8 is lower than the bursting pressure of the outer jacket 7, which is preferably approximately 15 bar. Thus, there is a safety margin present, which prevents the outer jacket 7 breaking simultaneously with the break plate 8. In other embodiments of the break plate 8, it can have a different bursting pressure, such as, for example, 2 bar, 3 bar and so forth, as long as the bursting pressure of the break plate 8 is lower than the bursting pressure of the outer jacket 7. As can be properly seen in Fig. 2b, the break plate 8 is in fluid communication with the outer jacket inner space 7a. The pressure in the outer jacket inner space 7a may run up, for example, upon breaking of the inner housing 9 so that the gas enters the outer jacket inner space 7a. This will be further elucidated with reference to Figs. 3a and 3b.

On a side 8b of the break plate 8 remote from the outer jacket inner space 7a, a discharge channel 13 is provided. This discharge channel 13 can be connected to an exhaust system 14 (see Fig. 1) by a discharge pipe 13b. The discharge pipe 13b is connectable at a first end to an outlet 13a of the discharge channel 13 and at a second end is connectable to the exhaust system 14. Such a discharge pipe 13b may be, for example, a gastight flexible hose. The discharge channel 13 is arranged for, in the event of the break plate 8 breaking, discharging gas from the outer jacket inner space 7a so that the pressure in the inner space 7a decreases in order for the outer jacket 7 to be kept intact.

In Figs. 3a and 3b, a further embodiment of the invention is shown. In this embodiment, the pipe component 6 is a regulator provided with an indicator. The cartridge 10 forms the indicator and the base 12 forms the regulator. Such a regulator has a high-pressure chamber and a low-pressure chamber which are mutually connected through a pressure reductor. The regulator is preferably connected in the gas pipe system directly to a gas cylinder to reduce the pressure from the gas cylinder to a pressure suitable for a process in the processing module 5 (see Fig. 1). The cartridge 10 has an outer jacket 7 and an inner housing 9, with the outer jacket inner space 7a between them. The outer jacket 7 has a bursting pressure of, for example, 15 bar, and the inner housing has a bursting pressure of, for example, 11 bar. In normal use, the gas flows via the base 12 through the inner housing 9 through the cartridge 10. In the inner housing 9 indicator material is provided. Such indicator materials are known from practice and may comprise, e.g., potassium dichromate and the like. The indicator may, for example, gradually discolor and thereby reflect the extent of pollution of the gas. Because the inner housing 9 is of a transparent material, e.g., glass, and the outer jacket 7 is at least partly of a transparent material, an operator can observe the extent of discoloration and if required replace the indicator cartridge 10.

The cartridge 10 is fastened to the base 12 with the aid of a fastening ring (not shown). For changing the cartridge 10, the fastening ring is removed, after which the cartridge 10 can be taken off. The cartridge 10 may, for example, be changed at the same time as the gas cylinder is changed. Further, the base 12 may comprise valves (not shown) for shutting off the outflow and inflow opening (not shown) for the gas in the base 12, in order to prevent inward diffusion of particles in the gas pipe system 1. It is particularly advantageous when an outflow opening 13c of the discharge channel 13 in a side of the coupling part 11 of the cartridge 10 that is opposite the base 12 has a different configuration than the gas inflow and gas outflow opening of the cartridge 10 in order to prevent incorrect connection of the cartridge 10 to the base 12. What may be accomplished, for example, with different diameters of the respective openings is that the cartridge 10 can only be fastened to the base 12 in one manner. It is also possible that the base 12 and the cartridge 10 both comprise cooperating shaped parts. This promotes proper connection and prevents cartridges from other manufacturers, for example without a protection, being fastened onto the base 12.

In Fig. 3b an overpressure situation is represented, where the break plate 8 has already broken after the inner housing 9 broke, so that gas G could penetrate into the outer jacket inner space 7a. With the break plate 8 broken, the gas G is discharged via the discharge channel 13 through the outlet 13a of the discharge channel 13 to the exhaust system 14 (see Fig. 1). In the discharge channel 13, downstream of the break plate 8 a sensor 15 may be provided. This sensor 15 is arranged to detect gas. When the break plate 8 is intact, there will be no gas in the discharge channel 13. The sensor 15 will therefore detect none. When the break plate 8 has broken, there arises a gas flow through the discharge channel 13, which is detected by the sensor 15. The sensor 15 passes a signal to the control 16 (schematically represented), after which the control 16 can carry out various actions. The control 16 may be designed, for example, to control the gas source 2 in order to shut it off. The gas flow through the gas pipe system 1 is thereby stopped and a defect, if any, can be remedied. Also, a broken cartridge 10 can be replaced. Depending on the location of the at least one broken cartridge 10, an operator can easily locate the location of the defect in the gas pipe system 1.

Also, the control 16 may be designed to generate a warning signal, such as, for example, a visual signal, such as switching on a lamp, or an audio signal to the operator or user. The operator can then trace a defect, if any, and may or may not stop the gas flow in the gas pipe system 1. It is clear, of course, that the sensor 15 may be provided at any location between the discharge channel 13 and the exhaust system 14, hence also somewhere in the discharge pipe 13b. Also, possibly, a sensor may be provided on the break plate 8, arranged to produce a signal when the break plate 8 breaks.

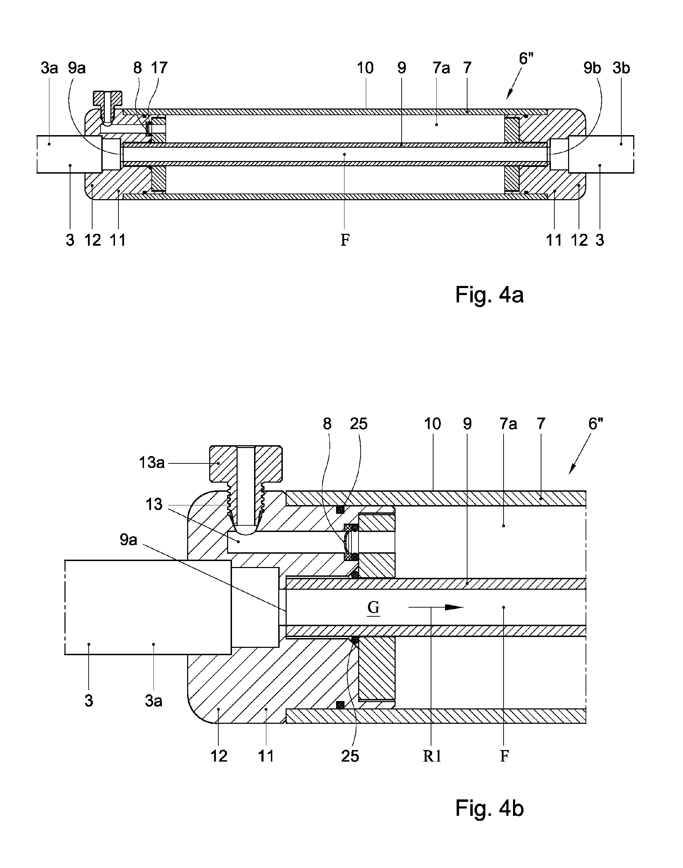

In Figs. 4a and 4b a third embodiment of a gas pipe component 6" is shown. This gas pipe component 6" is an in-line filter. This in-line filter 6" is mounted between two pipe parts 3a, 3b of the gas pipe system 1, for example, through squeeze fittings. Also, this filter 6" may be fastened with the aid of rapid couplings in order to promote easy change of the filter 6". This in-line filter 6" comprises a cartridge 10 provided with two coupling parts 11 which are integrated with respective bases 12. The cartridge 10 comprises an outer jacket 7 of a transparent material, e.g., acrylate, which outer jacket 7 protects the inner housing 9 against unnecessary breaking. The inner housing 9 comprises filter material F for filtering undesirable particles from the gas flowing through the inner housing 9. As the inner housing 9 is also of transparent material, an operator can observe the extent of saturation of the filter material F. At the in-line filter 6" the gas flows via an inflow opening 9a which is in fluid communication with the first pipe part 3a through the inner housing 9 in the direction R1 of the outflow opening 9b of the inner housing 9 situated at the other end of the outer jacket 7. The outflow opening 9b is in fluid communication with the second pipe part 3b of the gas pipe system 1. The break plate 8 is provided in one of the integrated base/coupling parts 11, 12 in order to break when the pressure in the outer jacket 7 runs up too high. This may be, for example, when the inner housing 9, in which the filter material F is provided, breaks. The discharge of the gas from the outer jacket 7 proceeds in a similar manner to that already described for earlier embodiments. Breaking of the outer jacket 7 is thus prevented. Especially in the case where filter materials are used that contain alkali or alkaline-earth metals, unhoped-for breaking open of the outer jacket 7 is highly undesirable, since these alkali or alkaline-earth metals react vehemently with moisture and oxygen, which can entail a hazard to the operator.

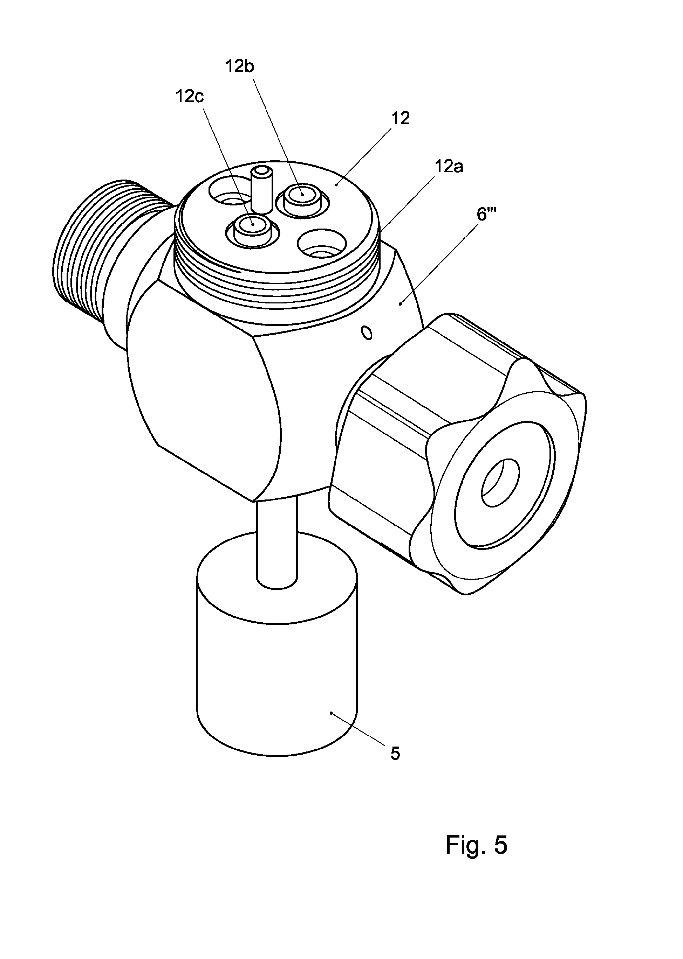

Finally, Fig. 5 shows a fourth embodiment of a gas pipe component 6"' according to the invention. In this figure, the gas pipe component 6"' is shown designed as a tap. For use, the base 12 of the tap is to be provided with a cartridge 10, for example, an indicator, which can be fastened onto the thread 12a of the base 12 with the aid of a fastening ring (not shown). The cartridge 10 will not be further described, since such an indicator has been described with reference to Figs. 3a and 3b. The base 12 comprises an inflow opening 12b and an outflow opening 12c for gas through the base 12 to the cartridge 10 and back again into the base 12, i.e. the tap. When the tap is in an open condition, the gas will be able to flow through to, for example, a processing module 5 (schematically represented) connected to the tap. When the indicator indicates, for example, a large extent of pollution, the gas supply to the processing module 5 can be closed off by closing the tap. The base 12 of the tap comprises also a discharge channel 13 (not shown) for discharging gas from the cartridge 10 when as a result of a high pressure the break plate 8 in the cartridge 10 has broken.

It will be clear that the invention is not limited to the exemplary embodiments described, but that various changes are possible within the framework of the invention as defined by the claims. In another embodiment of the invention, there may be provided in the outer jacket an inner housing that is open at one end and so is in fluid communication with the inner space of the outer jacket. In use, the gas flows via the inflow opening of the cartridge into the outer jacket and then flows via the open end through the inner housing, which may or may not be provided with filter material and/or indicator material. Via the inner housing, the gas leaves the cartridge via the outflow opening, then to flow via the base back into the gas pipe system again. In such an embodiment of the invention, the inner housing will not break upon a pressure impulse or a sudden pressure increase, since there is an open communication between the inner housing and the outer jacket. Naturally, it is also conceivable that the gas enters the inner space via an inner housing open on one side and then via the outer jacket inner space leaves the outer jacket inner space again through an outlet opening. Naturally, gas pipe systems with different compositions of gas pipe components fall within the invention. Thus, a gas pipe system may comprise only a few gas pipe components or a large number of components. Further, just a single gas pipe component with an outer jacket of a material having a relatively low bursting pressure may be present, but also more or all gas pipe components may be provided with an outer jacket of a material having a relatively low bursting pressure.

## Claims

1. A gas pipe system provided with a gas source (2) and downstream of the gas source (2) a gas pipe (3), which in use is connected to a processing module (5), wherein the gas pipe system (1) is arranged for conducting a gas from the gas source (2) to the processing module (5), wherein the gas pipe system (1) comprises at least one gas pipe component (6, 6', 6", 6"') with an outer jacket (7) comprising an outer jacket inner space (7a), which is at least partly of a material having a relatively low bursting pressure, **characterized in that** the at least one gas pipe component (6, 6', 6", 6"') is provided with a protection (8) against overpressure occurring in an outer jacket inner space (7a) in order to prevent breaking of the outer jacket (7) at the overpressure.

2. A gas pipe system according to claim 1, wherein the protection is a break plate (8), which is arranged to break at an overpressure in the outer jacket inner space (7a) that is lower than the relatively low bursting pressure of the outer jacket (7), in order to discharge gas from the pipe component (6, 6', 6", 6"').

3. A gas pipe system according to claim 1 or 2, wherein the outer jacket inner space (7a) is in fluid communication with the gas pipe (3).

4. A gas pipe system according to claim 1 or 2, wherein in the outer jacket inner space (7a) an inner housing (9) is provided which is in fluid communication with the gas pipe (3).

5. A gas pipe system according to at least claim 2, wherein the outer jacket (7) has a bursting pressure of approximately 15 bar and the break plate (8) has a bursting pressure of less than 15 bar.

6. A gas pipe system according to claim 4, wherein the outer jacket (7) has a higher bursting pressure than the inner housing (9).

7. A gas pipe system according to any one of the preceding claims, wherein the material having a relatively low bursting pressure is a transparent material, for example, glass or acrylate.

8. A gas pipe system according to any one of claims 1-7, wherein the at least one gas pipe component (6, 6', 6", 6"') is provided with a cartridge (10) which comprises the outer jacket (7) and a coupling part (11), and a base (12) connected with the coupling part (11), which is connected to the gas pipe (3) so that the gas pipe (3) is in fluid communication with the cartridge (10).

9. A gas pipe system according to claim 8, wherein the base (12) is designed as a regulator, filter base, tap, flowmeter or as a valve.

10. A gas pipe system according to claim 8 or 9, wherein the cartridge (10) is provided with filter material to filter gas, and/or with indicator material to indicate pollution of gas.

11. A gas pipe system according to any one of claims 8-10, wherein the break plate (8) is provided in the coupling part (11) of the cartridge (10) and wherein the break plate (8) is in fluid communication with the outer jacket inner space (7a).

12. A gas pipe system according to any one of claims 2-11, wherein on the side of the break plate (8) remote from the outer jacket inner space (7a) a discharge channel (13) is provided for discharging gas, wherein after the breaking of the break plate (8) the outer jacket inner space (7a) is in fluid communication with the discharge channel (13).

13. A gas pipe system according to claim 12, wherein the discharge channel (13) is connected to an exhauster (14) or a discharge space, such as a well ventilated space.

14. A gas pipe system according to claim 12 or 13, wherein in the discharge channel (13) of the at least one gas pipe component (6, 6', 6", 6"') a sensor (15) is provided for detecting gas in the discharge channel (13).

15. A gas pipe system according to claim 14, wherein the at least one sensor (15) is connected to a control, for controlling on the basis of a sensor signal the at least one pipe component (6, 6', 6", 6"') or the gas source (2), and/or for emitting on the basis of the sensor signal a visual signal and/or audio signal in order to warn a user.

16. A gas pipe component for the use in a gas pipe system according to any one of claims 1-15, wherein the gas pipe component (6, 6', 6", 6"') has an outer jacket (7) at least partly provided with material having a relatively low bursting pressure, wherein the gas pipe component (6, 6', 6", 6"') is provided with a protection (8) against overpressure occurring in the outer jacket inner space (7a) in order to prevent breaking of the outer jacket (7) in use.

17. A gas pipe component according to claim 16, wherein the protection is a break plate (8), which in use breaks at an overpressure in the outer jacket inner space (7a), so that gas is discharged from the gas pipe component (6, 6', 6", 6"').

18. A gas pipe component according to claim 17, wherein in the outer jacket inner space (7a) an inner housing is provided in which filter material to filter gas and/or indicator material to indicate pollution of gas is included, wherein the outer jacket is provided for protection of the inner housing and wherein the gas pipe component is provided with at least one coupling part that is part of a quick-change coupling of which a base cooperating with the coupling part is included in the gas pipe, wherein the break plate is provided in the at least one coupling part.
